# DEMANDE DE BREVET EUROPEEN

(11) **EP 0 556 141 A2**
(43) Date de publication de la demande: **18.08.1993**
(21) Numéro de dépôt: 93440013.6
(22) Date de dépôt: 09.02.1993
(51) Int. Cl.: F24F 3/16, F24F 13/068

(54) **Module de filtration d'air**

(30) Priorité: 11.02.1992 US 833778
(71) Demandeur: CLESTRA CLEANROOM, Société Anonyme, F-67200 Strasbourg (FR)
(72) Inventeur: Helmus, Martin C., Grandville, Michigan 49419 (US)
(74) Mandataire: Nuss, Pierre

(57) **Abrégé**

La présente invention a pour objet un module de filtration d'air.

Module de filtration d'air, comprenant un boîtier formant un réceptacle pour une unité de filtration (16) remplaçable de type normalisé, présentant des plis dans sa surface supérieure, et une chambre de pression (20) normalement située au-dessus dudit réceptacle, le module comprenant également une plaque de diffusion (21) perforée, interposée entre ladite chambre de pression (20) et ledit réceptacle, et un moyen d'insufflation (18) muni d'un orifice de décharge débouchant dans ladite chambre de pression (20), le perfectionnement consistant en une configuration de ladite plaque de diffusion (21) dans laquelle est prévue une pluralité de perforations (22) qui sont longilignes dans une direction transversale par rapport auxdits plis.

## Description

La présente invention concerne un module de filtration d'air.

Des appareils spécifiquement destinés à la filtration sont couramment montés au voisinage direct du plafond de ce qu'on appelle des "chambres blanches", afin d'éliminer substantiellement toute la contamination particulaire de l'air renfermé par la chambre. Ces appareils revêtent fréquemment la forme d'un groupe d'unités modulaires, dont chacune présente sa propre soufflante prélevant de l'air de la zone susjacente aux filtres, et insufflant cet air à force vers le bas dans la chambre, à travers les filtres. L'espace situé au-dessus des unités modulaires joue souvent un rôle prépondérant, impliquant des efforts pour réduire la hauteur totale desdites unités.

Cet effort se heurte à une difficulté. L'air doit être pressurisé, par la soufflante, dans une chambre située au-dessus des filtres, et doit s'écouler sur la totalité du filtre en étant équilibré d'une certaine façon. Les soufflantes centrifuges couramment employées font largement saillie à l'intérieur de la chambre d'équilibrage, et engendrent de part en part une forte turbulence dans cette chambre. Ces vitesses de turbulence horizontale doivent être converties, d'une certaine manière, en un écoulement vertical uniforme s'accompagnant d'une perte d'énergie minimale. Cela est tout particulièrement difficile lorsque la saillie de la soufflante, à l'intérieur de la chambre, réduit l'espace vertical disponible pour un écoulement latéral.

Des plaques perforées, interposées entre la chambre d'équilibrage et le sommet du filtre, sont utilisées pour réorienter les vitesses de turbulence, mais les configurations connues de ces plaques ne se traduisent pas par un écoulement suffisamment uniforme avec une chute de pression dans des limites souhaitées. Des unités de filtration normalisées de type HEPA (pour matières fines en suspension dans l'air) présentent habituellement une longueur de quatre pieds (121,9 cm) pour une largeur de deux pieds (60,9 cm) et sont plissées, sur la surface supérieure, dans une direction parallèle à la dimension la plus faible. L'utilisation de plaques de diffusion percées d'orifices longilignes, dont la longueur des orifices s'étend parallèlement aux plis, n'a été couronnée que d'un succès relatif. Ces plaques ressortent du brevet US-5 014 608, délivré le 14 mai 1991. Une autre forme de plaque de diffusion perforée comporte une rangée dense de petits trous circulaires uniformément espacés. Ces derniers se sont avérés, eux aussi, ne donner que partiellement satisfaction.

### CARACTERISTIQUES ESSENTIELLES DE L'INVENTION

Un module de filtration conforme à la présente invention comporte une plaque de diffusion percée d'orifices qui sont longilignes dans une direction perpendiculaire aux plans des plis du filtre,. Dans la région de la chambre d'équilibrage qui est partiellement occupée par le boîtier de la soufflante, la densité d'agencement des orifices est augmentée par rapport à celle de la région non obstruée de ladite chambre.

### PRESENTATION DES DESSINS

La figure 1 est une élévation en coupe d'un module de filtration conforme à la présente invention, à l'état entièrement assemblé, tel que représenté à la figure 2 (ligne de coupe 1-1).

La figure 2 est une vue en plan de l'unité illustrée sur la figure 1.

La figure 3 est une coupe fragmentaire, à échelle agrandie, de la partie de droite de la figure 1.

La figure 4 est une élévation en bout correspondant à la figure 2.

La figure 5 est une vue en plan de la plaque de diffusion incorporée dans le dispositif.

La figure 6 est une perspective en éclaté, représentant la relation entre l'unité de filtration plissée et la plaque de diffusion.

### DESCRIPTION DE LA FORME DE REALISATION PREFERENTIELLE

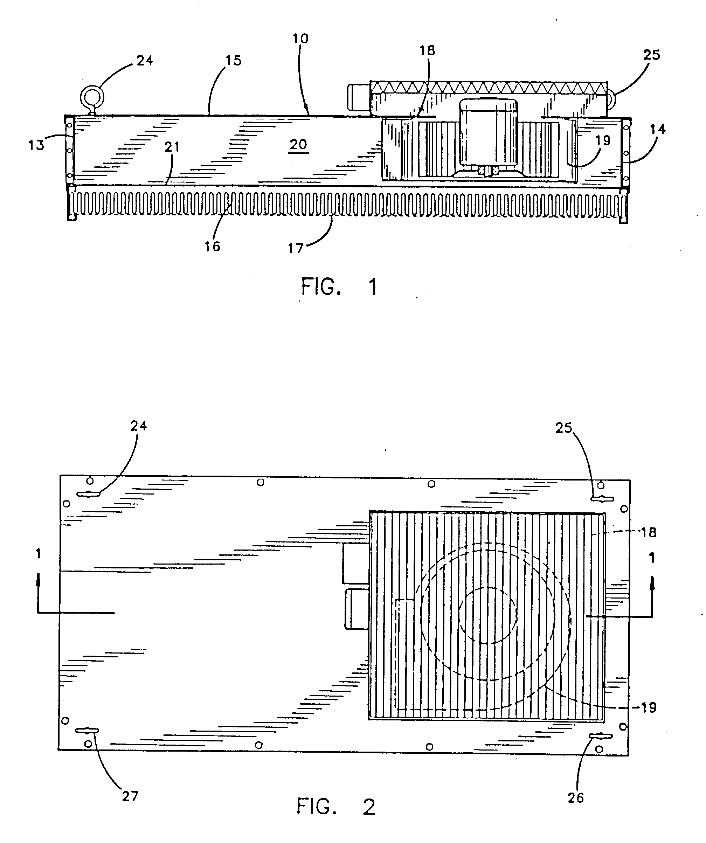

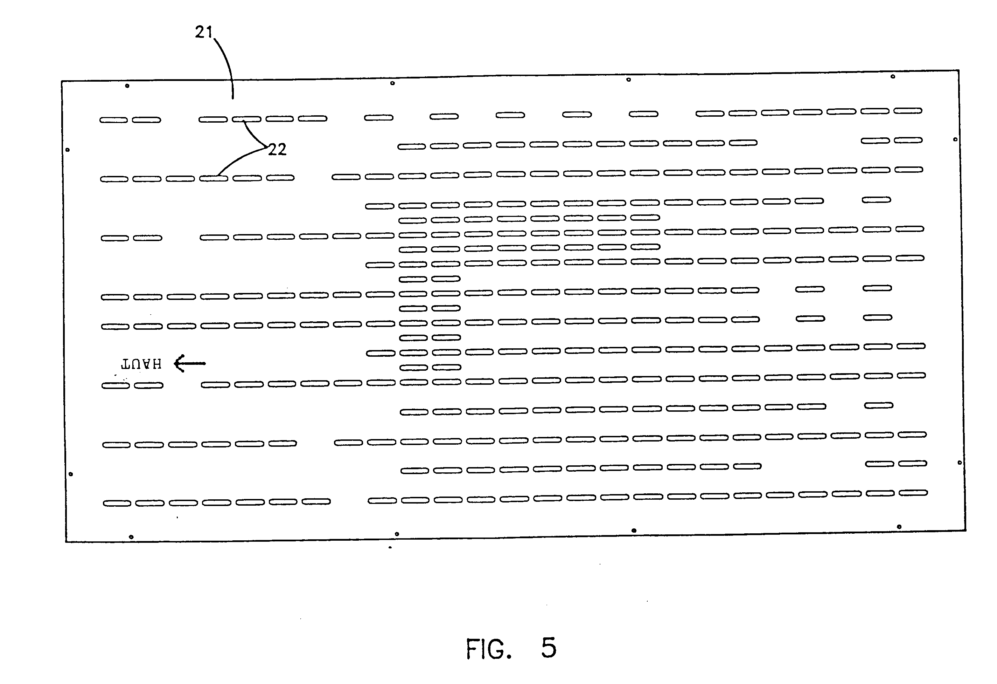

Comme le révèle une observation des figures 1-4, le module de filtration illustré est enchâssé dans un boîtier globalement désigné par 10 et comprenant les panneaux latéraux 11 et 12, les panneaux extrêmes 13 et 14, et le panneau supérieur 15. Une unité de filtration 16 est implantée en travers de la face inférieure ouverte du boîtier, protégée par une grille 17. Un soufflante 18 de type normalisé est installée du côté droit du sommet du boîtier, comme le montre la figure 2. Le carénage 19 de cette soufflante fait saillie à l'intérieur de la chambre 20 d'équilibrage de pression. Une plaque de diffusion 21 (illustrée en détail sur la figure 5) sépare la chambre 20 d'avec l'unité de filtration 16. Les dimensions globales de l'unité complète sont d'approximativement deux pieds (60,9 cm) par quatre pieds (121,9 cm) et l'interstice, entre la face inférieure de la soufflante et la plaque de diffusion, est de l'ordre d'un demi-pouce ((12,7 mm), ce qui provoque une limitation évidente de l'écoulement latéral de l'air à l'intérieur de cette région de la chambre 20.

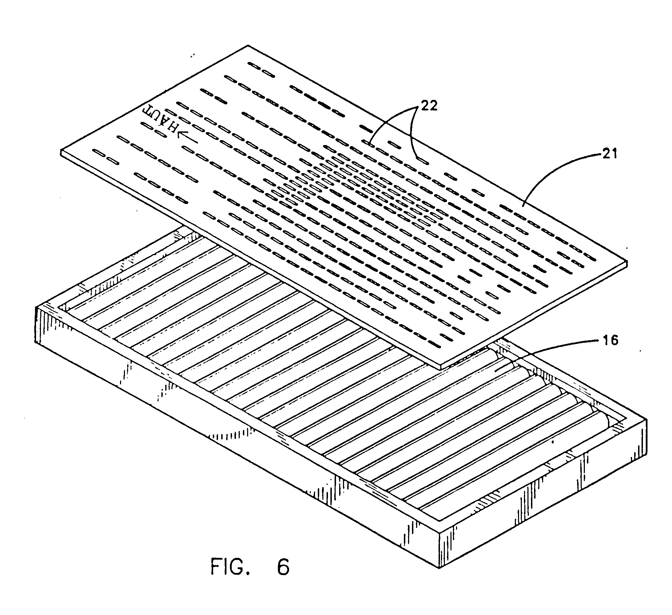

Comme le révèle une observation de la figure 5, la plaque de diffusion 21 est percée d'une pluralité d'orifices 22 qui sont longilignes dans une direction parallèle à la longueur de la plaque de diffusion. Comme l'atteste la figure 6, l'unité de filtration normalisée de type HEPA est plissée dans la direction transversale à la longueur. La relation, entre les orifices longilignes 22 et les plis du filtre, est telle que lesdits orifices sont longilignes dans une direction perpendiculaire aux plans desdits plis. Des expériences ont clairement révélé que cela produit des résultats nettement supérieurs à ceux d'un agencement dans lequel les orifices sont longilignes dans une direction parallèle aux plis.

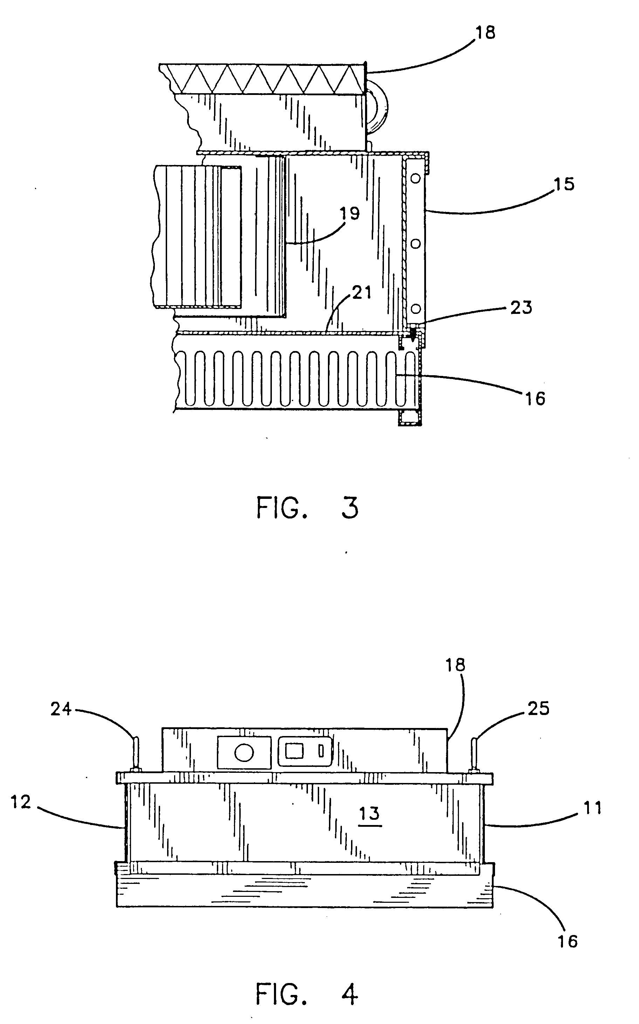

L'on fera également observer que la densité des perforations varie sur la superficie de la plaque de diffusion. L'écoulement turbulent à grande vitesse, sortant de la soufflante, a tendance à engendrer des régions de la chambre 20 dans lesquelles les vitesses de l'écoulement tourbillonnaire latéral ont une allure réluctante ayant pour effet de convertir leur énergie en une pression statique, et une légère augmentation de la densité des orifices 22 intervient dans ces régions. Dans la partie de gauche de la chambre 20, les configurations turbulentes revêtent une allure relativement continue et peuvent être contrebalancées par des variations intervenant dans la densité de l'agencement de ces orifices. Dans la région située au-dessous du carénage 19 de la soufflante, le problème d'équilibrage est particulièrement ardu. Dans cette région, toutefois, l'écoulement présente une allure assez constante, et peut être contrebalancé par une augmentation considérable de la densité des orifices dans les régions dont l'expérimentation a révélé qu'elles sont les plus critiques. Il s'agit là, bien entendu, de la région apparaissant globalement du côté droit de la figure 5 et adjacente à l'axe médian latéral de l'unité. De préférence, les orifices proprement dits ont une longueur de l'ordre d'un pouce et demi (38,1 mm) et une largeur de l'ordre d'un quart de pouce (6,35 mm) avec des extrémités arrondies de la manière illustrée. L'espacement entre les rangées (ces rangées étant considérées dans la direction longiligne des orifices) est de préférence exprimé en des multiples de trois quarts de pouce (19,05 mm). Dans une direction s'étendant le long des rangées d'orifices, leur espacement mutuel est d'approximativement un quart de pouce (6,35 mm) d'extrémité à extrémité. La plaque proprement dite consiste préférentiellement en de l'acier de calibre vingt laminé à froid, et peut être revêtue ou peinte pour résister à la corrosion. L'indication "HAUT" apparaissant sur la plaque est ménagée en des perforations relativement petites, et précise l'orientation de la plaque lors de l'assemblage de l'unité. La plaque est de préférence fixée au boîtier la long de l'aile périphérique 23 (voir la figure 3). Ces moyens de fixation peuvent être identiques à ceux qui assujettissent l'unité de filtration au boîtier 10. L'ensemble du dispositif peut être soit placé sur un appareillage de poutrelles suspendues au plafond, soit suspendu par les pitons 24-27.

## Revendications

1. Module de filtration d'air, comprenant un boîtier formant un réceptacle pour une unité de filtration remplaçable de type normalisé, présentant des plis dans sa surface supérieure, et une chambre de pression normalement située au-dessus dudit réceptacle, le module comprenant également une plaque de diffusion perforée, interposée entre ladite chambre de pression et ledit réceptacle, et un moyen d'insufflation muni d'un orifice de décharge débouchant dans ladite chambre de pression, le perfectionnement consistant en une configuration de ladite plaque de diffusion dans laquelle est prévue une pluralité de perforations qui sont longilignes dans une direction transversale par rapport auxdits plis.

2. Module selon la revendication 1, dans lequel lesdites perforations sont agencées en une configuration de densité différant entre diverses parties de ladite plaque, ladite configuration étant choisie pour provoquer un afflux sensiblement égal dans ladite unité de filtration, sur toute sa surface supérieure, et pour contrebalancer les effets de configurations d'écoulement et de constructions à l'intérieur de ladite chambre de pression.

3. Module selon la revendication 1, dans lequel chacune desdites perforations présente une largeur comprise entre trois seizièmes de pouce (4,8) et un demi-pouce (12,7 mm), et une longueur comprise entre un pouce (25,4 mm) et deux pouces (50,8 mm).

4. Module selon la revendication 3, dans lequel lesdites perforations sont agencées en des rangées parallèles, et ladite densité différente est obtenue en faisant varier le nombre desdites perforations dans lesdites rangées.

5. Module selon la revendication 1, dans lequel ledit moyen d'insufflation présente un carénage faisant saillie à l'intérieur de ladite chambre de pression au-dessus de ladite plaque de diffusion, lesdites perforations étant agencées avec densité accrue en vis-à-vis dudit espace réduit.
